# EUROPEAN PATENT APPLICATION

(11) **EP 3 429 013 A1**
(43) Date of publication of application: **16.01.2019**
(21) Application number: 15905479.0
(22) Date of filing: 02.10.2015
(51) Int. Cl.: H01M 10/052, H01M 4/48, H01M 4/505, H01M 4/525, H01M 4/66, H01M 10/0562, H01M 10/0565, H01M 10/0566

(54) **LITHIUM ION SECONDARY BATTERY**

(71) Applicant: Kogakuin University, Tokyo 163-8677 (JP)
(72) Inventor: NAGAI, Hiroki, Tokyo 163-8677 (JP); SATO, Mitsunobu, Tokyo 163-8677 (JP)
(74) Representative: Nordmeyer, Philipp Werner
(86) International application number: PCT/JP2015/078119
(87) International publication number: WO 2017/056326

(57) **Abstract**

The present invention aims to provide a lithium ion secondary cell configured to be charged by light such as solar light (particularly, UV light (for example, light having a wavelength of 350 nm to 400 nm)). The present invention relates to a lithium ion secondary cell including: a pair of substrates, at least one of the substrates being light transmitting; an electrolyte filled between the pair of substrates; a positive electrode that includes a positive electrode material selected from lithium-containing metal oxides and that is disposed to contact the electrolyte; and a negative electrode that includes a negative electrode material selected from n-type semiconductor materials and that is disposed to contact the electrolyte.

## Description

### Technical Field

The present invention relates to a lithium ion secondary cell.

### Background Art

Lithium ion secondary cells have recently been expected as promising electric power source for mobile electronic devices such as laptop computers, mobile phones and digital cameras or for large machines such as motor cars, taking advantage of their small sizes, light weights, and capacity to provide a high voltage. Thus, lithium ion secondary cells are in the process of being widely used in various fields.

Secondary cells have an advantage in that secondary cells can be repeatedly used through charging and discharging. Charging usually requires supply of electric power from an external electric power source. In other words, the presence of an external electric power source is essential for reutilization of discharged secondary cells.

Therefore, charging of a secondary cell cannot be performed in cases where, for example, the connection to an electric power source for supplying the necessary amount of electric power for charging the secondary cell is broken. Accordingly, there are cases where secondary cells cannot be used, for example, in case of emergency.

Concerning the above circumstances, Japanese Patent Application Laid-open (JP-A) No. 2005-79031 discloses an optically rechargeable secondary cell that can be repeatedly charged and discharged by light.

Japanese Patent Application Laid-open (JP-A) No. 2000-173679 discloses an optically rechargeable secondary cell which includes a photoelectrode as well as a positive electrode and a negative electrode, and in which protons generated at the photoelectrode are supplied to the negative electrode via a proton conductor. JP-A No. 2000-173679 describes that, in this cell, both of the positive electrode and the photoelectrode are allowed to contact with air, and oxygen generated at the photoelectrode is supplied to the positive electrode, so that photoirradiation, if performed during discharging, enhances a discharge reaction.

### SUMMARY OF INVENTION

### <Technical Problem>

However, although JP-A No. 2005-79031 describes that charging progresses based on redox reactions, JP-A No. 2005-79031 only describes a configuration in which ITO and TiO₂ are disposed in a positive electrode, and in which an electrolytic solution formed from lithium bromide or perchloric acid is used. It cannot be expected that the cell configuration disclosed in JP-A No. 2005-79031 exerts an optical charging effect in a lithium ion secondary cell.

The optically rechargeable secondary cell disclosed in JP-A No. 2000-173679 includes a photoelectrode, which is a third electrode distinct from the positive electrode and the negative electrode. The optically rechargeable secondary cell disclosed in JP-A No. 2000-173679 is different from a cell configuration that has two electrodes - a positive electrode and a negative electrode - and that has both of the secondary cell function and the solar cell function.

The present disclosure is presented in consideration of the above, and an object thereof is to provide a lithium ion secondary cell configured to be charged by light such as solar light (particularly, UV light (for example, light having a wavelength of 350 nm to 400 nm)).

### <Technical Solution>

Specific means for achieving the object include the following aspects.

An embodiment of the invention is a lithium ion secondary cell including:
a pair of substrates, at least one of the substrates being light transmitting;
an electrolyte filled between the pair of substrates;
a positive electrode that includes a positive electrode material selected from lithium-containing metal oxides and that is disposed to contact the electrolyte; and
a negative electrode that includes a negative electrode material selected from n-type semiconductor materials and that is disposed to contact the electrolyte.

In an embodiment of the invention, the following aspects are preferable.
<2> The lithium ion secondary cell according to <1>, wherein at least one of the substrates is an electrically conductive substrate that includes a compound selected from tin (Sn)-doped indium oxide (ITO), tin oxide, antimony (Sb)-doped tin oxide (ATO), fluorine (F)-doped tin oxide (FTO), aluminum (Al)-doped zinc oxide (AZO), or gallium (Ga)-doped zinc oxide (GZO).
<3> The lithium ion secondary cell according to <1> or <2>, wherein the positive electrode is disposed on a surface of one of the substrates, and the negative electrode is disposed on a surface of the other of the substrates.
<4> The lithium ion secondary cell according to any one of <1> to <3>, wherein the one substrate is an electrically conductive substrate, the other substrate is a light transmitting electrically conductive substrate, and the positive electrode and the negative electrode are disposed to face each other.
<5> The lithium ion secondary cell according to any one of <1> to <4>, wherein both of the substrates are light transmitting.
<6> The lithium ion secondary cell according to any one of <1> to <5>, wherein the n-type semiconductor material is a transition metal oxide.
<7> The lithium ion secondary cell according to <6>, wherein the transition metal oxide is an oxide of a metal selected from the group consisting of cobalt (Co), niobium (Nb), nickel (Ni), titanium (Ti), tungsten (W) and vanadium (V).
<8> The lithium ion secondary cell according to <7>, wherein the n-type semiconductor material is titanium dioxide, niobium oxide or zinc oxide.
<9> The lithium ion secondary cell according to any one of <1> to <8>, wherein the lithium-containing metal oxide is a compound selected from LiCoO₂, LiNiO₂, LiCo_{1/3}Ni_{1/3}Mn_{1/3}O₂ or LiMₓMn₂₋ₓO₄, wherein M represents Cr or Ni, and x satisfies 0 ≤ x <2.
<10> The lithium ion secondary cell according to any one of <1> to <9>, wherein the electrolyte is a lithium electrolytic solution or a lithium solid electrolyte.

### <Advantageous Effect of Invention>

According to an embodiment of the invention, a lithium ion secondary cell configured to be charged by light such as solar light (particularly, UV light) is provided.

### BRIEF DESCRIPTION OF DRAWINGS

Fig. 1 is a perspective view illustrating a lithium ion secondary cell according to an embodiment.
Fig. 2 is a cross-sectional view taken along the line A-A in Fig. 1.
Fig. 3 is a view illustrating a breakdown structure for explaining a process for producing a lithium ion secondary cell according to an embodiment.
Fig. 4 is a perspective view illustrating a modified example of a lithium ion secondary cell according an embodiment.
Fig. 5 is a graph showing a change in voltage upon photoirradiation of a lithium ion secondary cell of an example in which TiO₂ is used for a negative electrode and LiNi_{0.5}Mn_{0.5}O₂ is used for a positive electrode.
Fig. 6 is a graph showing a change in voltage upon photoirradiation of a lithium ion secondary cell of an example in which TiO₂ is used for a negative electrode and LiCoO₂ is used for a positive electrode.
Fig. 7 is a graph showing a change in voltage upon photoirradiation of a lithium ion secondary cell of an example in which TiO₂ is used for a negative electrode and LiNiO₂ is used for a positive electrode.
Fig. 8 is a graph showing a change in voltage upon photoirradiation of a lithium ion secondary cell of a comparative example.

### MODES FOR CARRYING OUT INVENTION

In the following, modes for carrying out the invention are described in orderly sequence, but the descriptions and examples therefor are provided for presenting exemplary embodiments of the invention, and do not limit the scope of embodiments of the invention.

Throughout the present specification, any numerical range specified using "to" includes the upper limit value and the lower limit value thereof.

In the invention, the expression "light transmitting" refers to a property that allows light to enter and pass through, preferably a property such that, when light enters a substrate from one side of the substrate, the amount of light that exits from the opposite side is at least 5% of the amount of light that has entered the substrate.

The lithium ion secondary cell according to an embodiment of the invention includes an electrolyte that is filled between a pair of substrates, and a positive electrode and a negative electrode that are disposed at positions between the pair of substrates, the positions being in contact with the electrolyte. A light transmitting substrate is used for at least one of the substrates (preferably both of the substrates), and a positive electrode and a negative electrode are disposed as electrodes between the pair of substrates, the positive electrode including a negative electrode material selected from n-type semiconductor materials and being disposed to contact the electrolyte, and the negative electrode including a negative electrode material selected from lithium-containing metal oxides and being disposed to contact the electrolyte.

In an embodiment of the invention, one of the substrates is light transmitting or both of the substrates are light transmitting. Therefore, light, such as solar light, enters the cell, and the positive electrode and the negative electrode are exposed to the entering light through the light transmitting substrate. Here, since the negative electrode includes a n-type semiconductor material, the negative electrode absorbs the entering light and generate electrons, and lithium ions at the positive electrode move from the crystal structure to the electrolyte. Then, lithium ions that have migrated from the positive electrode side enter a crystal structure of, for example, TiO₂ in the negative electrode, whereby a charging action is achieved. The charging action varies in terms of charging efficiency, depending on what positive material is used in combination with the n-type semiconductor material of the negative electrode. Use of a transition metal oxide in the positive electrode further increases the charging efficiency.

In the dark time in which light is shielded, lithium ions move from the crystal structure of the negative electrode to the electrolyte and are incorporated into the crystal structure of the positive electrode, whereby it becomes possible to supply a high voltage electric current to an external circuit.

As described above, the lithium ion secondary cell according to an embodiment of the invention is an optically rechargeable lithium ion secondary cell that includes two electrodes of the positive electrode and the negative electrode, that has both of the solar cell function and the secondary cell function, and that can be repeatedly charged and discharged based on the presence or absence of light irradiation.

As described above, the lithium ion secondary cell according to an embodiment of the invention does not need an electric power source for charging. Therefore, the lithium ion secondary cell can be used in conventional circumstances or places in which it is difficult to obtain an electric power source. In addition, since the lithium ion secondary cell according to an embodiment of the invention is light transmitting, the lithium ion secondary cell can be used in, for example, applications in which transparency are requested. Therefore, the lithium ion secondary cell according to an embodiment of the invention can be used not only as a substitute for conventional lithium ion secondary cells but also as an emergency electric power source or a solar cell, and the lithium ion secondary cell according to an embodiment of the invention is also expected to be used in applications including window materials for, for example, houses or vehicles, roofs, and vehicle bodies.

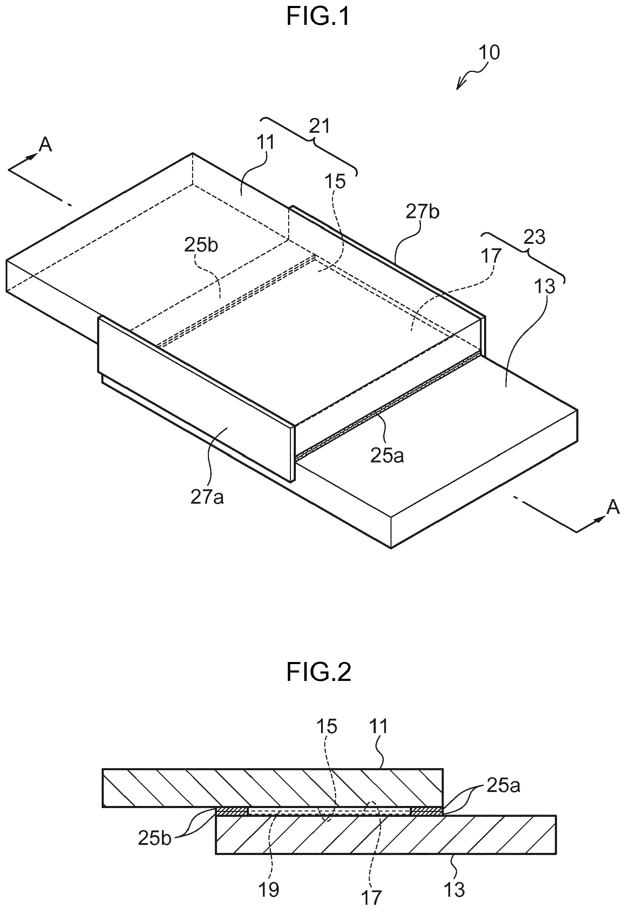

A lithium ion secondary cell according to one embodiment of the invention is specifically described with reference to Figs. 1 to 3. However, the invention is not limited to the following embodiment.

A lithium ion secondary cell according to one embodiment of the invention is an optically rechargeable lithium ion secondary cell, and may be configured to have the structure illustrated in Fig. 1.

As illustrated in Fig. 1, a lithium ion secondary cell 10 according to one embodiment includes: two fluorine-doped tin oxide (FTO; tin oxide doped with fluorine (F)) substrates 11 and 13, which are electrically conductive transparent substrates; a negative electrode film 15 that is disposed on one face of the FTO substrate 11 and that serves as a negative electrode; a positive electrode film 17 that is disposed on one face of the FTO substrate 13 and that serves as a positive electrode; and a lithium hexafluorophosphate (LiPF₆) electrolytic solution 19 disposed between the negative electrode film 15 and the positive electrode film 17.

### -Substrate-

The FTO substrates 11 and 13 are electrically conductive substrates (transparent substrates) that includes a glass substrate and a light transmitting electrically conductive film formed from fluorine-doped tin oxide (FTO film) provided on one face of the glass substrate. Each FTO substrate is configured such that, when the FTO substrate is exposed to light such as solar light, light passes through the FTO substrate and enters the inside of the cell. Upon entry of light coming from outside of the cell, the n-type semiconductor material present in the negative electrode is exposed to the light to generate electrons in the negative electrode, thereby exerting a charging function. Specifically, lithium ions (Li⁺) that have migrated from the positive electrode to the negative electrode enter into the crystals of the negative electrode material, to perform charging. Due to this process, the lithium ion secondary cell according to the present embodiment does not need charging by an external electric power source.

With respect to the pair of substrates in the lithium ion secondary cell, light irradiation of the negative electrode is possible and charging function is obtained as long as at least one of the two substrates is light transmitting. The pair of substrates may have a configuration in which one of the substrates is light transmitting and the other substrate is light non-transmitting. From the viewpoint of increasing the charging efficiency, a configuration is preferable in which, among the pair of substrates, at least the substrate disposed at the negative electrode side is light transmitting. From the same viewpoint, a configuration is more preferable in which both of the substrate disposed at the positive electrode side and the substrate disposed at the negative electrode side are light transmitting. In the lithium ion secondary cell 10 according to the present embodiment, both of the substrates are light transmitting substrates, as illustrated in Fig. 1.

With respect to the pair of substrates in the lithium ion secondary cell, the positive electrode is provided on a surface of one of the substrates, and the negative electrode is provided on a surface of the other of the substrates. Specifically, it is preferable that the pair of substrates is provided which include a positive electrode substrate having a positive electrode provided on at least one surface of an electrically conductive substrate, and a negative electrode substrate having a negative electrode provided on at least one surface of a light transmitting electrically conductive substrate. In this configuration, the positive electrode substrate and the negative electrode substrate are disposed preferably such that the positive electrode and the negative electrode disposed on the respective substrates face each other. This enables the positive electrode and the negative electrode to be in the state of contact with the electrolytic solution.

Examples of light transmitting substrates include glass substrates, ceramic substrates and resin substrates such as acrylic resin substrates. Examples of light non-transmitting substrates include metal plates and colored resin substrates.

The substrate is preferably a substrate having an electrically conducting property (electrically conductive substrate) from the viewpoint of the ability to be used in an electrode substrate on which a negative electrode including a negative electrode material or a positive electrode including a positive electrode material has been formed.

The term "electrically conductive" indicates a level of electric conductivity that enables application of voltage, and refers to a property that exhibits a specific resistance of less than 10⁶ Ω·cm.

Examples of electrically conductive substrates include metal plates and substrates having an electrically conductive film disposed on a desired substrate. Examples of electrically conductive films include films that include, for example, tin (Sn)-doped indium oxide (ITO), tin oxide, antimony (Sb)-doped tin oxide (ATO), fluorine (F)-doped tin oxide (FTO), aluminum (Al)-doped zinc oxide (AZO), or gallium (Ga)-doped zinc oxide (GZO).

Among them, light transmitting electrically conductive substrates are preferable, and electrically conductive substrates that include a film including a compound selected from tin (Sn)-doped indium oxide (ITO), tin oxide, antimony (Sb)-doped tin oxide (ATO), fluorine (F)-doped tin oxide (FTO), aluminum (Al)-doped zinc oxide (AZO), or gallium (Ga)-doped zinc oxide (GZO) are more preferable. Specifically, electrically conductive substrates that include the above-described light transmitting substrate and an ITO film, ATO film, FTO film, AZO film or GZO film provided on the light transmitting substrate are preferable.

### -Negative Electrode-

The negative electrode film 15 is disposed on one face of the FTO substrate 11 among the two pair-forming FTO substrates. The negative electrode film 15 is a negative electrode that includes a negative electrode material selected from n-type semiconductor materials, and titanium dioxide (TiO₂) is used as the negative electrode material in the present embodiment. In the lithium ion secondary cell according to the present embodiment, the negative electrode film 15 is provided on a surface of the light transmitting FTO substrate 11, thereby forming a negative electrode substrate 21.

It is preferable that the negative electrode is provided, as a thin film such as the negative electrode film 15, on a surface of the substrate. The thickness of the thin film is preferably 0.01 µm to 10 µm, and more preferably from 0.1 µm to 1 µm, from the viewpoints of light transmitting property and charging capacity. A method for forming a negative electrode in the form of a thin film will be described later.

Examples of the negative electrode material for use in the negative electrode include metal compounds selected from n-type semiconductor materials, and such metal compounds are suitable as negative electrode active materials into which lithium ions enter to be stored. Examples of the n-type semiconductor materials include metal oxides, metal nitrides and metal sulfides.

Examples of the metal oxides include cobalt oxide (CoO, Co₃O₄), silicon oxide (SiO), niobium oxide (Nb₂O₅), nickel oxide (NiO), titanium oxide (TiO₂), tungsten oxide (WO₃), vanadium oxide (V₂O₅), lithium titanate (Li₄Ti₅O₁₂), zinc oxide (ZnO), an tin oxide (SnO, SnO₂). Among them, oxides having high n-type semiconductor properties are preferable, and oxides of transition metals selected from the group consisting of zinc (Zn), niobium (Nb), titanium (Ti), tungsten (W) and vanadium (V) are more preferable, and TiO₂, Nb₂O₅ and ZnO are still more preferable.

Examples of the metal nitrides include Li₃₋ₓMₓN, in which M represents Co, Ni, Cu or the like, and 0<x<3. Specific examples thereof include Li₃N and Li_{2.6}Co_{0.4}N.

Examples of the metal sulfides include TiS₂.

The negative electrode may be an electrode in which a colorant such as RuL₂(NCS)₂ [L representing 2,2'-bipyridyl-4,4'-dicarboxylic acid or the like] is adsorbed on an n-type semiconductor as a negative electrode (for example, a negative electrode film).

Of the pair of substrates one of which has a positive electrode provided thereon, the negative electrode is preferably provided on a surface of the other substrate that is disposed to face the substrate having a positive electrode, as illustrated in Fig. 1, from the viewpoint of enabling a simple structure.

### -Positive Electrode-

The positive electrode film 17 is disposed on one face of the FTO substrate 13 from among the two pair-forming FTO substrates. The positive electrode film 17 is a positive electrode that includes a positive electrode material selected from lithium-containing metal oxides, and lithium cobaltate (LiCoO₂) is used as a positive electrode material in the present embodiment. In the lithium ion secondary cell according to the present embodiment, the positive electrode film 17 is disposed on a surface of the light transmitting FTO substrate 13, thereby forming a positive electrode substrate 23.

It is preferable that the positive electrode is provided, in the form of a thin flm such as the positive electrode film 17, on the surface of the substrate. The thickness of the thin film of the positive electrode is preferably from 0.01 µm to 10 µm, and more preferably from 0.1 µm to 1 µm, from the viewpoints of light transmitting property and charging capacity, similar to the case of the negative electrode film. A method for forming a positive electrode in the form of a thin film will be described later.

Examples of the positive electrode material for use in the positive electrode include compounds selected from lithium-containing metal oxides, which are suitable as positive electrode active substances that release lithium ions.

Examples of the lithium-containing metal oxides include compounds having a laminar structure such as LiCoO₂, LiNiO₂, LiCo_{1/3}Ni_{1/3}Mn_{1/3}O₂ and LiNi_{0.5}Mn_{0.5}O₂, and compounds having a spinel structure such as LiMₓMn₂₋ₓO₄ wherein M represents Cr, Ni or the like and x satisfies 0≤x<2.

Examples of the compounds having a spinel structure such as LiMₓMn₂₋ₓO₄ wherein M represents Cr, Ni or the like and x satisfies 0≤x<2 include LiMn₂O₄ and LiNi_{0.5}Mn_{1.5}O₄. Among compounds represented by LiMₓMn₂₋ₓO₄, compounds in which M represents Ni and x satisfies 0 ≤x≤1 are preferable, and LiNi_{0.5}Mn_{1.5}O₄ is particularly preferable.

Specific examples of organic sulfur compounds include Li₂S.

The positive electrode is preferably provided on a surface of one of the substrates, from the viewpoint of enabling a simple structure as illustrated in Fig. 1.

### -Electrolyte-

The gap between the negative electrode substrate 21 and the positive electrode substrate 23 in the lithium ion secondary cell according to the present embodiment is filled with lithium hexafluorophosphate (LiPF₆) electrolytic solution 19, which is an example of the electrolyte.

As illustrated in Fig. 1, the face of FTO substrate 11 provided with the negative electrode film and the face of the FTO substrate 13 provided with the positive electrode are adhered to each other by double-sided tapes 25a and 25b, which are disposed in parallel to each other along two sides of the negative electrode film 15 or the positive electrode film 17, and TEFLON (registered trademark, the same shall apply hereinafter) sheets 27a and 27b, of which the lengthwise direction is the lengthwise direction of the substrates, are attached to respective end faces in the widthwise direction of the two FTO substrates. In this manner, a gap corresponding to the thickness of the double-sided tapes is formed between the FTO substrate 11 and the FTO substrate 13, and is filled with the LiPF₆ electrolytic solution 19, as a result of which the LiPF₆ electrolytic solution 19 contacts both of the negative electrode film 15 disposed on the FTO substrate 11 and the positive electrode film 17 disposed on the FTO substrate 13.

Although an example in which a liquid electrolyte (electrolytic solution) is used is described in the present embodiment, the electrolyte is not particularly limited. The electrolyte is not limited to electrolytic solutions in the liquid form, and electrolytes in the solid form (solid electrolytes) are also usable.

Examples of electrolytic solutions that can be used include lithium electrolytic solutions that include a lithium salt and a desired solvent, and ionic-liquid-containing lithium electrolytic solutions that include a lithium salt, a desired solvent and an ionic liquid. Examples of the lithium salt include LiPF₆, LiBF₄ and LiClO₄. Examples of the solvent include cyclic carbonates such as ethylene carbonate, propylene carbonate, fluoroethylene carbonate and difluoroethylene carbonate, chained carbonates such as dimethyl carbonate, diethyl carbonate and ethyl methyl carbonate, and cyclic esters such as γ-butyrolactone and γ-valerolactone.

Examples of the solid electrolytes include polymer gel electrolytes in which any of the above lithium salts is mixed with polyethylene oxide or the like to form a combined substance, solid polymer electrolytes (for example, polymers having an ethylene oxide bond), and inorganic solid electrolytes (for example, LiAl_{0.3}Ti_{1.7}(PO₄)₃).

### <Shape of Lithium Ion Secondary Cell>

The shape of the lithium ion secondary cell according to the present embodiment is not particularly limited, and may be any of a coin shape, a rectangular shape, a cylindrical shape, a pack battery shape, or the like.

### <Production of Lithium Ion Secondary Cell>

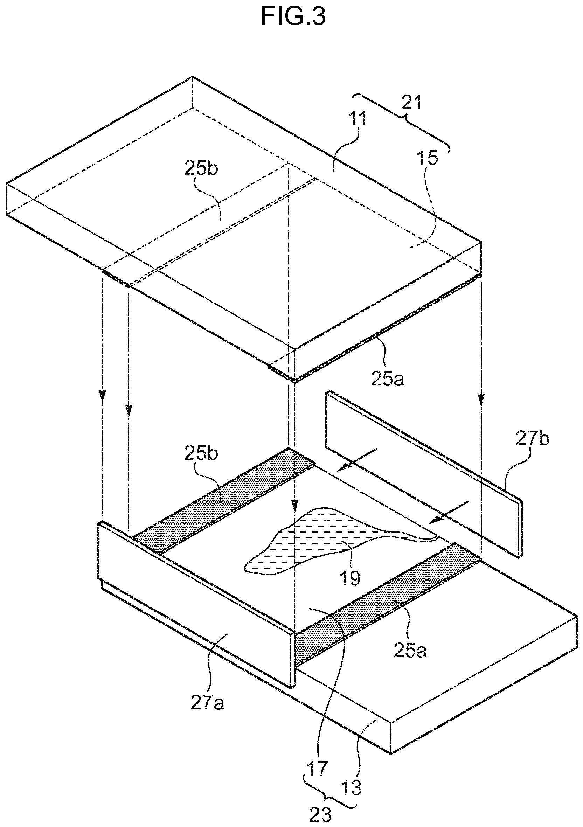

The lithium ion secondary cell according to the present embodiment can be produced, for example, by the following methods as illustrated in Fig. 3. The provision of the negative electrode film and the positive electrode film can be carried out by, for example, coating. As a result of coating, a negative electrode film and a positive electrode film that are thin films can be obtained. In the present embodiment, the negative electrode film and the positive electrode film are provided by coating.

In the present embodiment, the two FTO substrates 11 and 13 as the pair of substrates are prepared first, the negative electrode film 15 is formed by coating on one face of the FTO substrate 11, and the positive electrode film 17 is formed by coating on one face of the FTO substrate 13.

The provision of the negative electrode film and the positive electrode film can be carried out either of the following two methods.
(1) A method including: dissolving or dispersing a negative electrode material or a positive electrode material in a desired solvent to prepare a coating liquid; applying the coating liquid to a desired position on the substrate to form a coating film; and drying the coating film to form a negative electrode film or a positive electrode film.
(2) A method including dissolving or dispersing a precursor compound (precursor) for forming a negative electrode material or a positive electrode material in a desired solvent to prepare a precursor liquid; applying the precursor liquid as a coating liquid to a desired position on a substrate to form a coating film; and thermally treating the coating film to cause oxidation or the like of the precursor compound, thereby forming a negative electrode film or a positive electrode film.

Commercially available products may be used as the precursor liquid. For example, various molecular precursor liquids manufactured by Wako Pure Chemical Industries, Ltd. (for example, a molecular precursor liquid TFLEAD-Ti for forming a titanium oxide thin film, a molecular precursor liquid TFLEAD-Co for forming a cobalt oxide thin film, a molecular precursor liquid TFLEAD-Li for forming lithium oxide, and the like) can be used.

The coating may be carried out using known coating methods. For example, the coating can be performed favorably using spin coating, bar coating, dipping, roll coating or the like. The coating thickness is preferably set in consideration of the thickness after thermal treatment. The coating thickness may be set to a thickness of from 0.01 µm to 5 µm.

Thereafter, double-sided tapes 25a and 25b as fixing members are provided to the film-formed faces of the FTO substrates, in parallel to each other along two side of the negative electrode film 15 or the positive electrode film 17 at both ends in the substrate lengthwise direction. The fixing materials are adhesion members for adhering and fixing the two FTO substrates to each other. For example, double-sided tapes having a pressure-sensitive adhesive layer on both faces of the substrate, thermoplastic resin sheets configured to perform melt adhesion, and the like can be used as the fixing members. The provision of the fixing members enables a gap for filling an electrolytic solution to be formed between the two FTO substrates.

The two FTO substrates 11 and 13 provided with the fixing members are superposed one on the other such that the double-sided tapes 25a and 25b as the fixing members contact each other, thereby performing fixing. Since an inter-substrate space corresponding to the thickness of the double-sided tapes 25a and 25b is left open at both ends of the two FTO substrates in the widthwise direction, TEFLON sheets 27a and 27b of which the lengthwise direction is the substrate lengthwise direction are attached to close the space. For example, a process may be carried out in which, first, the TEFLON sheet 27a is attached to one side, the LiPF₆ electrolytic solution 19 is thereafter injected, from the other side, into the space, and the TEFLON sheet 27b is attached to the other side after the injection, thereby achieving closure.

As a result of the above, a lithium ion secondary cell can be prepared having a structure in which the space enclosed by the FTO substrates 11 and 13, the double-sided tapes 25a and 25b, and the TEFLON sheets 27a and 27b is filled with the LiPF₆ electrolytic solution 19. The LiPF₆ electrolytic solution 19 is in the state of contacting both of the negative electrode film 15 disposed on the FTO substrate 11 and the positive electrode film 17 disposed on the FTO substrate 13.

### <Modified Example>

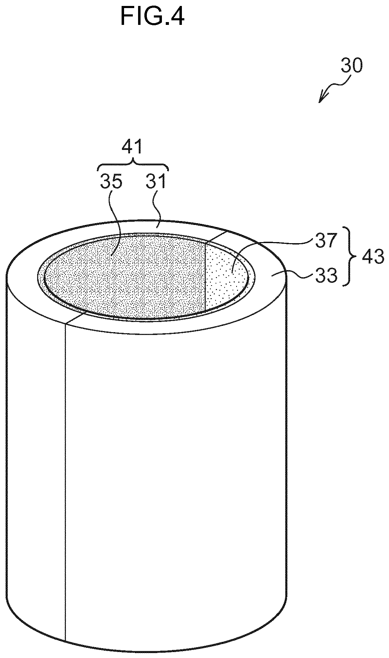

Next, a first modified example of the lithium ion secondary cell according to the invention is described with reference to Fig. 4. A lithium ion secondary cell according to another embodiment may have a configuration with a cylindrical cell structure as illustrated in Fig. 4.

As illustrated in Fig. 4, a lithium ion secondary cell 30 according to this embodiment has a cylindrical shape, in which arc-shaped FTO substrates (light transmitting electrically conductive substrates) 31 and 33 are prepared as the pair of substrates, a negative electrode film 35 is disposed on the inner-side wall face of the arc-shaped FTO substrate 31, a positive electrode film 37 is disposed on the inner-side wall face of the arc-shaped FTO substrate 33, and the FTO substrate 31 and the FTO substrate 33 are combined and fixed to each other such that the inner-side wall faces of the respective FTO substrates face each other. In the lithium ion secondary cell according to the present embodiment, a negative electrode substrate 41 is provided by disposing the negative electrode film 35 on a surface of the light transmitting FTO substrate 31, and a positive electrode substrate 43 is provided by disposing the positive electrode film 37 on a surface of the light transmitting FTO substrate 33. The inner space of the cylindrical shape is filled with an electrolyte, for example an electrolytic solution (not shown in the figure). The arc-shaped FTO substrates are electrically conductive substrates that each have a FTO film on an arc-shaped resin substrate.

By achieving a state in which the opening top portion and bottom portion of the cylindrical shape are closed and in which an electrolyte such as an electrolytic solution is filled into the inner space of the cylindrical shape, the electrolytic solution contacts the negative electrode film 35 and the positive electrode film 37, thereby obtaining a lithium ion secondary cell according to the present embodiment.

The top portion and bottom portion of the cylindrical shape may be closed by any method as long as a structure from which the electrolyte, such as an electrolytic solution, does not leak out is obtained. The specifics of the pair of substrates, the negative electrode film, the positive electrode film, the electrolyte, and the like are the same as in the already-described embodiment, and preferable modes thereof are also the same.

A second modified example of the lithium ion secondary cell according to the invention is described below.

In the above-described embodiments, cases in which a negative electrode substrate and a positive electrode substrate, each obtained by providing a negative electrode film or a positive electrode film to a FTO substrate, are adhered to each other to form a single cell structure. However, an alternative configuration may be adopted in which a housing container made of an electrically insulating base material is provided, plural sets (for example, two sets or three sets) of the negative electrode substrate having a negative electrode film on a FTO substrate and the positive electrode substrate having a positive electrode film on a FTO substrate as described in the above embodiments are placed in the housing container and connected in parallel, and an electrolytic solution or the like is filled into, thereby producing a cell structure.

### EXAMPLES

Embodiments of the invention will be more specifically described below by reference to examples. However, embodiments of the invention are not limited to the following examples as far as the gist of the invention is retained. Further, "part(s)" refers to "part(s) by mass" unless otherwise specified.

### (Example 1)

Four FTO substrates (20 mm × 33 mm, manufactured by AGC Inc.) having a transparent and electrically conductive fluorine-doped tin oxide (FTO; tin oxide doped with fluorine (F)) film on a surface of soda lime glass were prepared as substrates, and a part (20 mm × 20 mm) of the surface of the FTO film of each of the rectangular substrates was used as a region (film-forming region) for forming an electrode film, as illustrated in Fig. 3.

### -Preparation of Negative Electrode (Negative Electrode Substrate)-

From the four FTO substrates, one FTO substrate was used for a negative electrode substrate. Specifically, a molecular precursor liquid TFLEAD-Ti (titanium complex solution, manufactured by Wako Pure Chemicals Inc.) for forming a titanium oxide thin film was dropped, in a volume of 50 µL, on a film-forming region of the FTO substrate (on a surface of the FTO substrate), and spin-coated to form a coating film having a thickness of 2 µm. Then, the coating film was dried at 70 °C, to form a titania precursor film. Then, the FTO substrate is placed in a muffle furnace, and the titania precursor film was thermally treated at a temperature of 500 °C for 30 minutes, thereby forming a TiO₂ film having a thickness of 0.1 µm as a negative electrode film.

### -Preparation of Positive Electrode (Positive Electrode Substrate)-

Subsequently, the following precursor liquids, each in a volume of 50 µl, were dropped on the respective film-forming regions respectively on the three FTO substrates (each on the surface of its corresponding FTO film), and applied by spin coating to form a 1 µm-thick coating film. Thereafter, the coating film was dried at 70 °C, to form a precursor film. Then, each of the FTO substrates was placed in a muffle furnace, and the precursor film was thermally treated at 550 °C for 30 minutes, to form a LiNi_{0.5}Mn_{0.5}O₂ film, a LiCoO₂ film, or a LiNiO₂ film (each in a thickness of 0.1 µm) as a positive electrode film on the FTO substrate.

### <Preparation of Precursor Solutions for Forming Film>

### (1) Preparation of LiNi_{0.5}Mn_{0.5}O₂ Precursor Solution

The following lithium oxide precursor solution, nickel oxide precursor solution and manganese oxide precursor solution were mixed in a metal ion concentration [mmol/g] ratio of 1:0.5:0.5, to form a LiNi_{0.5}Mn_{0.5}O₂ precursor solution.

### (2) Preparation of LiCoO₂ Precursor Solution

The following lithium oxide precursor solution and cobalt oxide precursor solution were mixed in a metal ion concentration [mmol/g] ratio of 1:1, to form a LiCoO₂ precursor solution.

### (3) Preparation of LiNiO₂ Precursor Solution

The following lithium oxide precursor solution and nickel oxide precursor solution were mixed in a metal ion concentration [mmol/g] ratio of 1:1, to form a LiNiO₂ precursor solution.

The precursor solutions used for the preparation of the precursor solutions for forming a film were prepared according to the following methods.

### <Preparation of Lithium Oxide Precursor Solution>

0.6 g of lithium acetate and 1.8 g of butylamine were added to 10 g of ethanol and dissolved, to form a lithium oxide precursor solution.

### <Preparation of Nickel Oxide Precursor Solution>

1.7 g of nickel acetate and 2.0 g of butylamine were added to 10 g of ethanol and dissolved, to form a nickel oxide precursor solution.

### <Preparation of Manganese Oxide Precursor Solution>

1.9 g of manganese acetate and 3.3 g of butylamine were added to 10 g of ethanol and dissolved, to form a manganese oxide precursor solution.

### <Preparation of Cobalt Oxide Precursor Solution>

1.9 g of cobalt acetate and 3.3 g of butylamine were added to 10 g of ethanol and dissolved, to form a cobalt oxide precursor solution.

### -Production of Cell-

200 µm-thick double sided tapes made of polyester were attached to the film-formed face of each of the two FTO-substrates after the thermal treatment, in parallel to each other along the two sides of the negative electrode film or the positive electrode film at the ends in the substrate lengthwise direction. Then, a protective sheet was removed from each of the attached double-sided tapes, and the two FTO substrates, which were arranged such that the negative electrode film and the positive electrode film face each other, were superposed one on the other to cause the double-sided tapes provided on the respective FTO substrates contact each other, whereby the two FTO substrates were adhered and fixed to each other. After the adhesion, a LiPF₆ electrolytic solution (lithium hexafluorophosphate solution as an electrolyte, which was manufactured by SIGMA-ALDRICH and had a LiPF₆ concentration of 1.0 M in dimethyl carbonate) was filled into the gap between the two FTO substrates, thereby forming a battery cell. A 200 µm-thick TEFLON sheet was inserted into both ends of the gap in the battery cell in the substrate width direction, which were in the open state. Thus, the openings were closed, thereby preventing leakage and evaporation of the LiPF₆ electrolytic solution.

As a result of the above, a photo-rechargeable lithium ion secondary cell was produced.

### (Comparative Example 1)

A lithium ion secondary cell was produced in the same manner as in Example 1, except that, in the preparation of the positive electrode (positive electrode substrate), the precursor solution was changed to the Li₃Fe₂(PO₄)₃ solution, and a Li₃Fe₂(PO₄)₃ film was formed as the positive electrode film.

### (Evaluation)

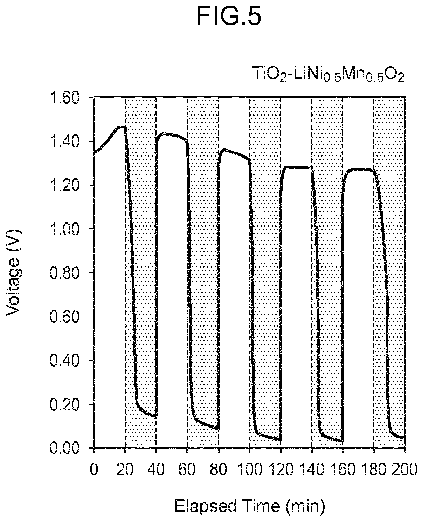

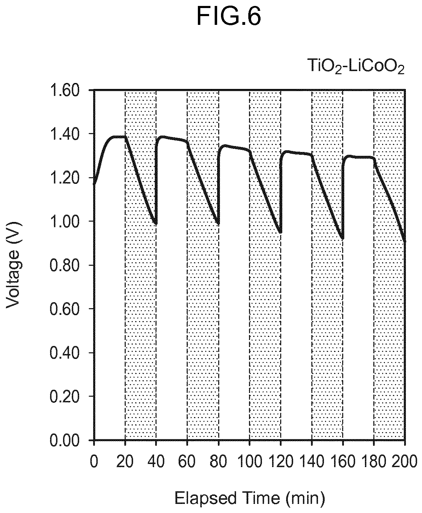

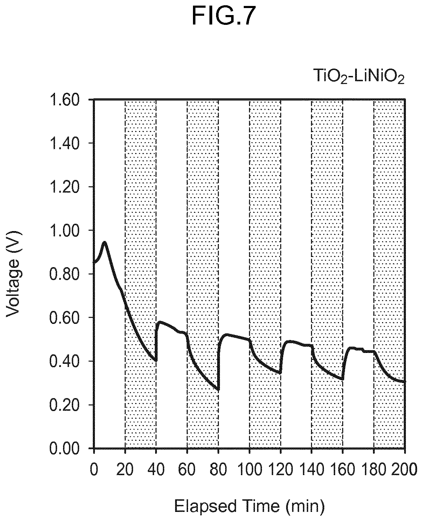

Each of the four lithium ion secondary cells produced in the Examples and the Comparative Example was subjected to five cycles of the cycle operation including (i) irradiating the lithium ion secondary cell with UV light (of which the irradiation intensity at a wavelength of 365 nm was 10 mW/cm²) for 20 minutes from the negative electrode side using a xenon lamp, and (ii) thereafter pausing the irradiation to allow natural discharge for 20 minutes. The results of the charging and discharging are shown in Figs. 5 to 8. The cycle operation was performed while measuring the voltage with a voltmeter that was connected to the two FTO substrates of each cell via conductive wires.

In Figs. 5 to 8, the period indicated by the dotting (for example, the period in which the horizontal axis is from 20 to 40 min., and the period in which the horizontal axis is from 60 to 80 min.) is the dark period during which the irradiation was not performed.

In the photo-rechargeable lithium ion secondary cells according to the Examples, titanium dioxide, which is a n-type semiconductor material, was used for the negative electrode, and a lithium-containing metal oxide was used for the positive electrode. As demonstrated in Figs. 5 to 7, it was confirmed that each of the photo-rechargeable lithium ion secondary cells according to the Examples exhibited an increase in the voltage in a period during which the secondary cell was irradiated with UV light, and, even after the irradiation was paused, each of the photo-rechargeable lithium ion secondary cells according to the Examples was in the state in which the voltage was maintained, i.e., the charged state.

In particular, in each of the photo-rechargeable lithium ion secondary cells in which lithium cobaltate (LiCoO₂) or lithium nickellite (LiNiO₂) was used for the positive electrode, a voltage decrease after the pausing of the irradiation was small, showing an excellent charging effect, as compared to the cell in which LiNi_{0.5}Mn_{0.5}O₂ was used for the positive electrode. In particular, in the case of using LiCoO₂ for the positive electrode, a high voltage was obtained, and an excellent performance was also exhibited in terms of charging effect.

As described above, it was found that the voltage in the charged state varies with the identity of the positive electrode material used for the positive electrode.

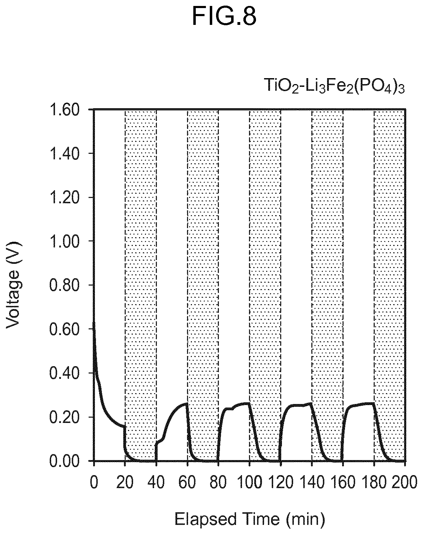

In contrast, in the lithium ion secondary cell according to the Comparative Example, in which a n-type semiconductor material (titanium dioxide) was used for the negative electrode, and in which a phosphate-based lithium compound that is different from lithium-containing metal oxides was used for the positive electrode, the voltage was low, and, further, the charging effect was hardly observed, as shown in Fig. 8.

All publications, patent applications, and technical standards mentioned in this specification are herein incorporated by reference to the same extent as if each individual publication, patent application, or technical standard was specifically and individually indicated to be incorporated by reference.

## Claims

1. A lithium ion secondary cell comprising:
a pair of substrates, at least one of the substrates being light transmitting;
an electrolyte filled between the pair of substrates;
a positive electrode that includes a positive electrode material selected from lithium-containing metal oxides and that is disposed to contact the electrolyte; and
a negative electrode that includes a negative electrode material selected from n-type semiconductor materials and that is disposed to contact the electrolyte.

2. The lithium ion secondary cell according to claim 1, wherein at least one of the substrates is an electrically conductive substrate that includes a compound selected from tin (Sn)-doped indium oxide (ITO), tin oxide, antimony (Sb)-doped tin oxide (ATO), fluorine (F)-doped tin oxide (FTO), aluminum (Al)-doped zinc oxide (AZO), or gallium (Ga)-doped zinc oxide (GZO).

3. The lithium ion secondary cell according to claim 1 or claim 2, wherein the positive electrode is disposed on a surface of one of the substrates, and the negative electrode is disposed on a surface of the other of the substrates.

4. The lithium ion secondary cell according to claim 3, wherein the one substrate is an electrically conductive substrate, the other substrate is a light transmitting electrically conductive substrate, and the positive electrode and the negative electrode are disposed to face each other.

5. The lithium ion secondary cell according to any one of claims 1 to 4, wherein both of the substrates are light transmitting.

6. The lithium ion secondary cell according to any one of claims 1 to 5, wherein the n-type semiconductor material is a transition metal oxide.

7. The lithium ion secondary cell according to claim 6, wherein the transition metal oxide is an oxide of a metal selected from the group consisting of zinc (Zn), niobium (Nb), titanium (Ti), tungsten (W) and vanadium (V).

8. The lithium ion secondary cell according to claim 7, wherein the n-type semiconductor material is titanium dioxide, niobium oxide or zinc oxide.

9. The lithium ion secondary cell according to any one of claims 1 to 8, wherein the lithium-containing metal oxide is a compound selected from LiCoO₂, LiNiO₂, LiCo_{1/3}Ni_{1/3}Mn_{1/3}O₂ or LiMₓMn₂₋ₓO₄, wherein M represents Cr or Ni, and x satisfies 0 ≤ x <2.

10. The lithium ion secondary cell according to any one of claims 1 to 9, wherein the electrolyte is a lithium electrolytic solution or a lithium solid electrolyte.
